# EUROPÄISCHE PATENTSCHRIFT

(11) **EP 1 068 543 B1**
(45) Veröffentlichungstag und Bekanntmachung des Hinweises auf die Patenterteilung: **11.12.2002**
(21) Anmeldenummer: 99916798.4
(22) Anmeldetag: 17.03.1999
(51) Int. Cl.: G01S 15/10, G01S 15/04, G01S 15/87

(54) **VERFAHREN ZUM BETRIEB MEHRERER BENACHBARTER ULTRASCHALL-SENSOREN**
METHOD FOR OPERATING SEVERAL ADJACENT ULTRASONIC SENSORS
PROCEDE PERMETTANT DE FAIRE FONCTIONNER PLUSIEURS DETECTEURS D'ULTRASONS VOISINS

(30) Priorität: 30.03.1998 DE 19814181
(43) Veröffentlichungstag der Anmeldung: 17.01.2001
(73) Patentinhaber: SIEMENS AKTIENGESELLSCHAFT, 80333 München (DE)
(72) Erfinder: LUBER, Ernst, D-92259 Neukirchen (DE)
(86) Internationale Anmeldenummer: DE9900745
(87) Internationale Veröffentlichungsnummer: WO99050687

(56) Entgegenhaltungen:
- EP-A- 0 519 090
- US-A- 4 779 240
- PATENT ABSTRACTS OF JAPAN vol. 010, no. 080 (P-441), 29. März 1986 & JP 60 218087 A (KOMATSU SEISAKUSHO KK), 31. Oktober 1985

## Beschreibung

Die Erfindung bezieht sich auf ein Verfahren zum Betrieb mehrerer benachbarter Ultraschall-Sensoren, die synchronisiert sind und von denen ein erster erste Sendeimpulse, ein zweiter zweite Sendeimpulse und ein dritter dritte Sendeimpulse aussendet.

Ein gattungsgemäßes Verfahren ist in der EP 0 519 090 B1 beschrieben. Beim Betrieb von benachbarten Ultraschall-Sensoren kann es aufgrund von ungünstigen Reflexionen des Ultraschalls im Umfeld der Ultraschall-Sensoren zur gegenseitigen Beeinflussung kommen. Die Laufzeitmessung eines Ultraschall-Sensors wird vom Echosignal des benachbarten Ultraschall-Sensors gestört, wenn die Ultraschall-Sensoren nicht synchron senden. Es können dann möglicherweise die Echosignale nicht den Ultraschall-Sensoren richtig zugeordnet werden, die die entsprechenden Sendeimpulse ausgegeben haben. Daher kommt es bei der Laufzeitauswertung zu Fehlern, indem der Schaltausgang undefiniert gesetzt wird. Zur Lösung des Problems ist es bisher bekannt, die Ultraschall-Sensoren seriell zu betreiben, indem die Versorgungsspannungen der Ultraschall-Sensoren zyklisch zu- bzw. abgeschalten wurden. Die Ansprechzeit der Ultraschall-Sensoren ist bei dieser Technik entsprechend lang und wird sogar noch durch interne Reset-Zeiten verzögert. Eine weitere Möglichkeit, die gegenseitige Beeinflussung zu vermeiden, besteht bisher auch in der Einhaltung von Einbauvorschriften, d.h. der Vorgabe von Mindestabständen für die Installierung der Ultraschall-Sensoren. Die Mindestabstände sind jedoch sehr applikationsabhängig. Für viele Einsatzmöglichkeiten scheidet diese Methode aus, wenn ein hohes Sicherheitsmaß gefordert ist. Eine weitere Lösung zur Vermeidung gegenseitiger Beeinflussung besteht darin, daß die benachbart betriebenen Ultraschall-Sensoren über ihren Freigabeausgang miteinander durch eine gemeinsame Leitung verbunden werden und hierüber eine Parallelsynchronisation erfolgt. Hierbei werden von allen Näherungsschaltern zum gleichen Zeitpunkt Sendeimpulse abgegeben, so daß das Problem der zeitlich richtigen Zuordnung der Echosignale zu den betreffenden Ultraschall-Sensoren entfällt. Eine derartige Parallelsynchronisation hat jedoch den Nachteil, daß die Laufzeitauswertung keine gegliederten Auswerte-Algorithmen enthält. Die EP 0 519 090 B1 beschreibt eine Zusammenschaltung von mehreren Ultraschall-Sensoren über ihre Freigabeausgänge durch eine gemeinsame Leitung mit einer selbsttätigen parallelen oder seriellen Synchronisation.

Allerdings stellt die Abtastung von schnellen Vorgängen, wie sie z.B. zur Autozählung in den Zufahrten von Parkhäusern erforderlich ist, immer noch ein bisher ungelöstes Problem dar.

Daher liegt der Erfindung die Aufgabe zugrunde, ein Verfahren der obengenannten Art dadurch zu verbessern, daß die Laufzeitmessung eines Ultraschall-Sensors von Echosignalen benachbarter Ultraschall-Sensoren ungestört und zuverlässig möglich ist.

Die Aufgabe wird mit den Merkmalen gemäß dem Patentanspruch 1 gelöst. Danach werden die benachbarten Ultraschall-Sensoren über eine gemeinsame Leitung synchronisiert und Sendeimpulse zeitlich wechselnd versetzt abgegeben. Dabei ist der Sendeimpulsversatz der einzelnen Ultraschall-Sensoren wesentlich kleiner als der Meßzyklus, d.h. als die Dauer zwischen zwei aufeinander folgenden Sendeimpulsen, wodurch eine wesentlich höhere Meßrate erreicht werden kann, als z.B. bei der bekannten seriellen Synchronisation. Durch den wechselnden Sendeimpulsversatz können die Echosignale benachbarter Ultraschall-Sensoren durch ihre ständig wechselnde Laufzeit ausgeblendet werden.

Um dies zu erreichen, wird das Verfahren vorteilhaft mit den Merkmalen nach Anspruch 2 weitergebildet. Danach werden von den Ultraschall-Sensoren empfangene Echosignale mehrerer Meßzyklen, d.h. sowohl die eigenen Echosignale als auch Fremdechosignale, hinsichtlich ihrer Lage miteinander verglichen und ausgewertet.

Als besonders vorteilhafte Weiterbildung des Verfahrens hat sich erwiesen, wenn als Stabilitätskriterium zur Ermittlung des gesuchten eigenen Echosignals jedes Ultraschall-Sensors die in aufeinanderfolgenden Meßzyklen stets innerhalb des gleichen Zeitfensters vorkommende Lage eines einzigen Echosignals dient. Dabei ist das Zeitfenster hinsichtlich Größe und Lage bezogen auf den ihm vorausgehenden Sendeimpuls. Nur das eigene Echosignal behält nämlich stets die Lage in etwa bei, während sich durch den von Meßzyklus zu Meßzyklus verändernden Sendeimpulsversatz die Lage der Fremdechosignale verändert. Somit ist ein einfaches und zugleich sicheres Kriterium zur Ermittlung des gesuchten Echosignals gegeben.

Ein Ausführungsbeispiel der Erfindung wird im folgenden anhand einer Zeichnung näher erläutert.

Das erfindungsgemäße Verfahren zur richtungsunabhängigen Zählung von Fahrzeugen mittels mehrerer, benachbarter Ultraschall-Sensoren geht von der Voraussetzung aus, daß die Ultraschall-Sensoren synchronisiert betrieben werden, z.B. in der in der EP 0 519 090 B1 beschriebenen Weise. Hierzu sind die Ultraschall-Sensoren durch eine Leitung miteinander verbunden. Die Synchronisierimpulse der Ultraschall-Sensoren überlappen sich zeitlich mindestens teilweise, und an der Leitung steht solange ein Massepotential an, wie noch irgendein Synchronisierimpuls der Ultraschall-Sensoren ansteht. Erst wenn die Leitung das Potential HIGH annimmt ist die Bereitschaft zum Aussenden neuer Ultraschall-Wellen, d.h. eines Sendeimpulses der Näherungsschalter gegeben. Diese durch die Synchronisierimpulse der Ultraschall-Sensoren bedingten Flankenwechsel haben ein Taktsignal zur Folge, dessen positive Flanken als Bezugszeitpunkte für die Sendeimpulse der Ultraschall-Sensoren dienen. Dabei werden die Sendeimpulse zeitlich wechselnd in Bezug auf die positiven Flanken versetzt ausgegeben. Der Sendeimpulsversatz der einzelnen Ultraschall-Sensoren ist wesentlich kleiner als der Meßzyklus, d.h. als die Dauer zwischen zwei aufeinander folgenden Sendeimpulsen eines Ultraschall-Sensors. Hierdurch läßt sich eine wesentlich höhere Meßrate erreichen als z.B. bei der eingangs erwähnten seriellen Synchronisation. Die höhere Meßrate ist von um so größerer Bedeutung, wenn mit den Ultraschall-Sensoren sich schnell bewegende Objekte erfaßt werden sollen. Durch den wechselnden Sendeimpulsversatz können die Echosignale der benachbarten Ultraschall-Sensoren durch ihre ständig wechselnde Laufzeit in Bezug auf den Sendeimpuls des jeweils betrachteten Ultraschall-Sensors ausgeblendet werden. Die Ultraschall-Sensoren speichern in einem Meßzyklus die Laufzeit des eigenen Echosignals und die Laufzeiten der jeweils benachbarten Ultraschall-Sensoren. Die Laufzeiten der Echosignale dreier Meßzyklen werden miteinander verglichen, wobei nur die Laufzeit der eigenen Echosignale des Ultraschall-Sensors das vorgegebene Stabilitätskriterium erfüllt. Dies trifft zu, wenn das Echosignal mindestens dreimal hintereinander in demselben Zeitfenster festgestellt wird. Dabei kann die Lage des Zeitfensters sich abhängig von der Meßstrecke, z.B. zwischen dem Ultraschall-Sensor und dem Boden oder dem Ultraschall-Sensor und einer Dachfläche eines Fahrzeugs, verschieben. Die Größe dieses Zeitfensters kann angepaßt an den jeweiligen Anwendungsfall vorgegeben werden.

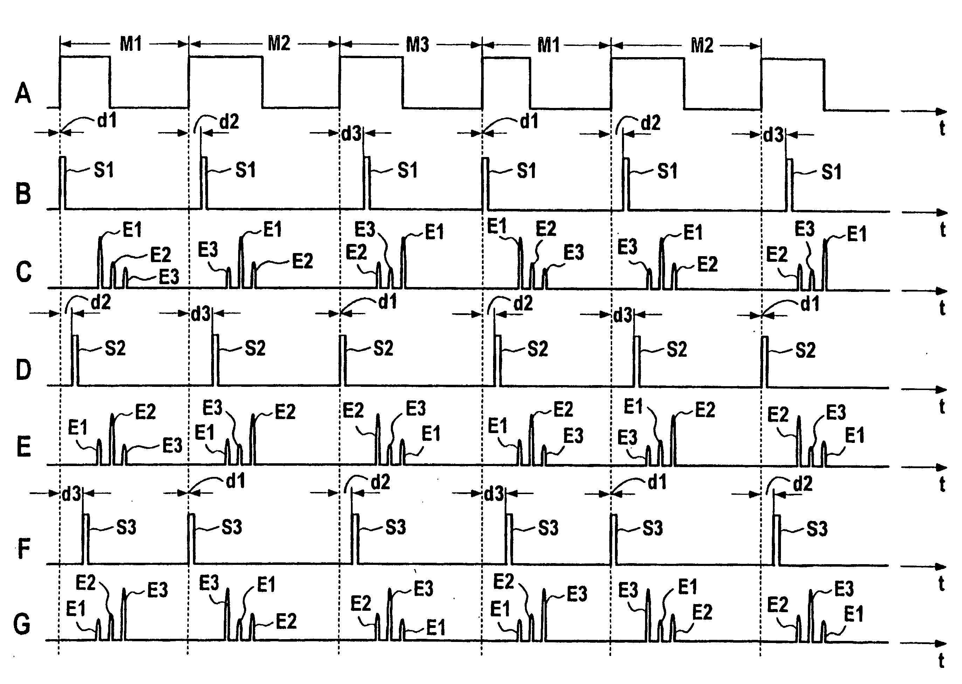

Anhand eines Beispiels mit drei synchronisierten Ultraschall-Sensoren werden die beim Betrieb auftretenden Signalverläufe gemäß der Figur erläutert. Der oberste Signalverlauf A zeigt das aufgrund der Synchronisierimpulse der einzelnen Ultraschall-Sensoren selbsttätig gebildete Taktsignal, wie es ausführlich der EP 0 519 090 B1 zu entnehmen ist. Wie bereits oben erwähnt, werden ausgehend von den positiven Flanken des Taktsignals mit sich änderndem Sendeimpulsversatz die Sendeimpulse der Ultraschall-Sensoren abgegeben.

Die in der Spur B dargestellten Sendeimpulse S1 für den Ultraschall-Sensor haben für die Meßtakte M1, M2 und M3 des Taktsignals drei unterschiedliche Sendeimpulsversätze d1, d2 und d3, wobei im vorliegenden Beispiel d1 = 0 ms, d2 = 5 ms und d3 = 10 ms ist. Diese treten in der genannten Reihenfolge und danach sich zyklisch wiederholend auf.

Die darunterliegenden Spuren D und F zeigen die Lage der Sendeimpulse S2 für den zweiten Ultraschall-Sensor und S3 für den dritten Ultraschall-Sensor. Die Sendeimpulse S2 haben beginnend mit den Meßtakt 1 folgende Reihenfolge der Sendeimpulsversätze, nämlich d2 für Meßtakt M1, d3 für Meßtakt M2 und d1 für Meßtakt M3 mit einer sich anschließenden zyklischen Wiederholung. Die Sendeimpulse S3 des dritten Ultraschall-Sensors beginnen mit dem Sendeimpulsversatz d3 beim Meßtakt M1, dem sich der Sendeimpulsversatz d1 für Meßtakt M2 und nachfolgend d2 für Meßtakt M3 anschließen. Dabei haben d1, d2 und d3 im vorliegenden Beispiel stets die obengenannten Zahlenwerte. Den Sendeimpulsen des jeweiligen Ultraschall-Sensors zugeordnet sind in den Spuren C, E, G die von dem betreffenden Ultraschall-Sensor empfangenen Echosignale aufgezeichnet. Im Meßtakt 1 empfängt der erste Ultraschall-Sensor nach etwa 15 ms sein eigenes Echosignal E1 und nach weiteren 5 bzw. 10 ms aufgrund des Sendeimpulsversatzes die Echosignale E2 bzw. E3 des zweiten bzw. dritten Ultraschall-Sensors. Im anschließenden Meßtakt M2 tritt wiederum das eigene Echosignal E1 nach 15 ms des Sendeimpulses S1 auf. Aufgrund des Sendeimpulsversatzes tritt aber das Echosignal E3 5 ms vor dem Echosignal E1 auf und das Echosignal E2 5 ms später. Im anschließenden Meßtakt 3 ergibt sich aufgrund des Sendeimpulsversatzes eine weitere abweichende Reihenfolge der Echosignale mit dem zuerst empfangenen Echosignal E2, dem nach 5 ms folgenden Echosignal E3 und dem nach weiteren 5 ms folgenden Echosignal E1. Dabei erkennt man, daß nur das Echosignal E1 das Stabilitätskriterium erfüllt und dreimal hintereinander in demselben Zeitfenster, nämlich nach 15 ms, auftritt. Dieses Zeitfenster ist im vorliegenden Beispiel, angepaßt an den Sendeimpulsversatz, kleiner als 5 ms.

Der zeitliche Sendeimpulsversatz muß so groß gewählt werden, daß die Echosignale selektiv erfaßt werden können. Wenn das Echosignal mindestens dreimal hintereinander in dem genannten Zeitfenster festgestellt wird, ändert der Senderausgang des Ultraschall-Sensors seinen Zustand und es wird ein Zählimpuls gegeben.

Wie bereits oben erwähnt, hängt die Lage der Echosignale und die zugehörigen Zeitfenster, in denen die Echosignale liegen, von der jeweiligen Meßstrecke ab.

Auch die Echosignale E2 bzw. E3 des zweiten bzw. dritten Ultraschall-Sensors gemäß den Spuren D und F werden in entsprechender Weise jeweils miteinander verglichen und ausgewertet, um nur die Laufzeiten der eigenen Echosignale in der beschriebenen Weise herauszufiltern, d.h. die Echosignale benachbarter Ultraschall-Sensoren auszublenden. Die Sendeimpulsversätze für die verschiedenen Ultraschall-Sensoren können unter ihnen zugeordneten Adressen abgelegt werden. Somit ist z.B. folgende Zuordnung möglich:
Unter der Adresse 1 für den ersten Ultraschall-Sensor d1 = 0 ms, d2 = 5 ms, d3 = 10 ms, d1 = 0 ms, d2 = 5 ms, d3 = 10 ms usw.,
unter der Adresse 2 für den zweiten Ultraschall-Sensor d2 = 5 ms, d3 = 10 ms, d1 = 0 ms, d2 = 5 ms, d3 = 10 ms, d1 = 0 ms usw. und
unter der Adresse 3 für den dritten Ultraschall-Sensor d3 = 10 ms, d1 = 0 ms, d2 = 5 ms, d3 = 10 ms, d1 = 0 ms, d2 = 5 ms usw..

Bei dem beschriebenen Verfahren arbeiten die Ultraschall-Sensoren selbständig, d.h. ohne zusätzlichen Steuerungsaufwand. Selbstverständlich ist jedoch eine zentrale Steuerung der Ultraschall-Sensoren möglich.

## Patentansprüche

1. Verfahren zum Betrieb mehrerer benachbarter Ultraschall-Sensoren, die synchronisiert sind und von denen ein erster erste Sendeimpulse (S1), ein zweiter zweite Sendeimpulse (S2) und ein dritter dritte Sendeimpulse (S3) aussendet, **dadurch gekennzeichnet, daß** ein Taktsignal mit mindestens einem ersten (M1) einem zweiten (M2) und einem dritten Meßtakt (M3) erzeugt wird, die nacheinander auftreten, daß ein erster der ersten Sendeimpulse (S1) bezogen auf den ersten Meßtakt (M1) mit einem ersten Sendeimpulsversatz (d1) erzeugt wird, ein zweiter der ersten Sendeimpulse (S1) bezogen auf den zweiten Meßtakt (M2) mit einem zweiten Sendeimpulsversatz (d2) erzeugt wird und ein dritter der ersten Sendeimpulse (S1) bezogen auf den dritten Meßtakt (M3) mit einem dritten Sendeimpulsversatz (d3) erzeugt wird, was einer ersten Sendeimpulsreihenfolge d1-d2-d3 für die ersten Sendeimpulse (S1) bezogen auf die Meßtakte (M1, M2, M3) entspricht, daß ein erster, ein zweiter und ein dritter der zweiten Sendeimpulse (S2) bezogen auf den ersten (M1), den zweiten (M2) und den dritten Meßtakt (M3) mit dem zweiten (d2), dem dritten (d3) und dem ersten Sendeimpulsversatz (d1) nach einer zweiten Sendeimpulsreihenfolge d2-d3-d1 erzeugt werden und daß ein erster, ein zweiter und ein dritter der dritten Sendeimpulse (S3) bezogen auf den ersten (M1), den zweiten (M2) und den dritten Meßtakt (M3) mit dem dritten (d3), dem ersten (d1) und dem zweiten Sendeimpulsversatz (d2) nach einer dritten Sendeimpulsreihenfolge d3-d1-d2 erzeugt werden.

2. Verfahren zum Betrieb mehrerer benachbarter Ultraschall-Sensoren nach Anspruch 1, **dadurch gekennzeichnet, daß** den ersten, zweiten bzw. dritten Sendeimpulsen (S1, S2 bzw. S3) erste, zweite bzw. dritte Echosignale (E1, E2 bzw. E3) zugeordnet sind und die von dem ersten, zweiten bzw. dritten Ultraschall-Sensor empfangenen Echosignale (E1, E2, E3) mehrerer Meßzyklen hinsichtlich ihrer Läge miteinander verglichen und ausgewertet werden.

3. Verfahren zum Betrieb mehrerer benachbarter Ultraschall-Sensoren nach Anspruch 2, **dadurch gekennzeichnet, daß** als Stabilitätskriterium zur Ermittlung des gesuchten eigenen Echosignals (E1, E2 bzw. E3) jedes Ultraschall-Sensors die in aufeinander folgenden Meßzyklen vorkommende Lage eines einzigen Echosignals (E1, E2, E3) stets innerhalb des gleichen Zeitfensters dient, das bezogen auf den ihm vorausgehenden Sendeimpuls (S1, S2 oder S3) in Lage und Größe gleich ist.

## Claims

1. Method for operating a plurality of adjacent ultrasound sensors which are synchronised and in which a first ultrasonic sensor emits first transmission pulses (S1), a second ultrasonic sensor emits second transmission pulses (S2), and a third ultrasonic sensor emits third transmission pulses (S3), **characterised in that** a clock signal is generated with at least a first (M1), a second (M2) and a third measurement clock (M3), which occur in sequence, that a first one of the first transmission pulses (S1) is generated with a first transmission pulse offset (d1) for the first measurement clock (M1), a second one of the first transmission pulses (S1) is generated with a second transmission pulse offset (d2) for the second measurement clock (M2), and a third one of the first transmission pulses (S1) is generated with a third transmission pulse offset (d3) for the third measurement clock (M3), corresponding to a first transmission pulse sequence d1-d2-d3 for the first transmission pulses (S1) for the measurement clocks (M1, M2, M3), that a first one, a second one and a third one of the second transmission pulses (S2) are generated for the first (M1), the second (M2) and the third measurement clock (M3) with the second (d2), the third (d3) and the first transmission pulse offset (d1) according to a second transmission pulse sequence d2-d3-d1, and that a first one, a second one and a third one of the third transmission pulses (S3) are generated for the first (M1), the second (M2) and the third measurement clock (M3) with the third (d3), the first (d1) and the second transmission pulse offset (d2) according to a third transmission pulse sequence d3-d1-d2.

2. Method for operating a plurality of adjacent ultrasonic sensors according to Claim 1, **characterised in that** the first, second and third echo signals (E1, E2 and E3) are assigned to the first, second and third transmission pulses (S1, S2 and S3) respectively and the echo signals (E1, E2, E3) of a plurality of measurement cycles received by the first, second and third ultrasonic sensor respectively are compared with each other and evaluated with respect to their position.

3. Method for operating a plurality of adjacent ultrasonic sensors according to Claim 2, **characterised in that** the position of a single echo signal (E1, E2, E3) is used as a stability criterion to determine each ultrasonic sensor's sought echo signal (E1, E2 or E3 respectively). In successive measurement cycles the position of the single echo signal (E1, E2, E3) always occurs within the same time window, which with respect to size and position is equal to the transmission pulse (S1, S2 or S3) which precedes it.

## Revendications

1. Procédé d'exploitation de plusieurs capteurs d'ultrasons voisins qui sont synchronisés et dont un premier capteur émet des premières impulsions (S1), un deuxième capteur émet des deuxièmes impulsions (S2) et un troisième capteur émet des troisièmes impulsions (S3), **caractérisé en ce qu'**il est généré un signal de synchronisation ayant au moins une première période de mesure (M1), une deuxième période de mesure (M2) et une troisième période de mesure (M3) qui apparaissent successivement, **en ce qu'**une première impulsion des premières impulsions (S1) relativement à la première période de mesure (M1) est générée avec un premier décalage d'impulsions d'émission (d1), une deuxième impulsion des premières impulsions (S1) relativement à la deuxième période de mesure (M2) est générée avec un deuxième décalage d'impulsions d'émission (d2) et une troisième impulsion des premières impulsions (S1) relativement à la troisième période de mesure (M3) est générée avec un troisième décalage d'impulsions d'émission (d3), ce qui correspond à une première série d'impulsions d'émission d1-d2-d3 pour les premières impulsions d'émission (S1) relativement aux périodes de mesure (M1, M2, M3), **en ce qu'**une première impulsion, une deuxième impulsion et une troisième impulsion des deuxièmes impulsions d'émission (S2) relativement à la première période de mesure (M1), à la deuxième période de mesure (M2) et à la troisième période de mesure (M3) sont générées avec le deuxième décalage d'impulsions d'émission (d2), le troisième décalage d'impulsions d'émission (d3) et le premier décalage d'impulsions d'émission (d1) après une deuxième série d'impulsions d'émission d2-d3-d1 et **en ce qu'**une première impulsion, une deuxième impulsion et une troisième impulsion des troisièmes impulsions d'émission (S2) sont générées relativement à la première période de mesure (M1), à la deuxième période de mesure (M2) et à la troisième période de mesure (M3) avec le troisième décalage d'impulsions d'émission (d3), le premier décalage d'impulsions d'émission (d1) et le deuxième décalage d'impulsions d'émission (d2) après une troisième série d'impulsions d'émission d3-d1-d2.

2. Procédé d'exploitation de plusieurs capteurs d'ultrasons voisins selon la revendication 1, **caractérisé en ce que** des premier, deuxième et troisième signaux échos (E1, E2, E3) sont respectivement associés aux première, deuxième et troisième impulsions d'émission (S1, S2, S3) et les signaux échos (E1, E2, E3) reçus par le premier, le deuxième ou le troisième capteur d'ultrasons sont comparés entre eux et sont évalués quant à leur position.

3. Procédé d'exploitation de plusieurs capteurs d'ultrasons voisins selon la revendication 2, **caractérisé en ce que** la position d'un signal écho unique (E1, E2, E3) se trouvant toujours à l'intérieur de la même fenêtre temporelle dans des cycles de mesure successifs sert de critère de stabilité pour détecter le signal écho propre recherché (E1, E2 ou E3) de chaque capteur d'ultrasons, laquelle fenêtre temporelle est la même quant à la dimension et la position vis-à-vis de l'impulsion d'émission qui la précède (S1, S2, S3).
